# EUROPEAN PATENT SPECIFICATION

(11) **EP 4 473 936 B1**
(45) Date of publication and mention of the grant of the patent: **15.04.2026**
(21) Application number: 24180518.3
(22) Date of filing: 06.06.2024
(51) Int. Cl.: A61C 8/00, A61C 1/08

(54) **SURGICAL DEVICE FOR MOUNTING A ZYGOMATIC IMPLANT**
CHIRURGISCHE VORRICHTUNG ZUR BEFESTIGUNG EINES JOCHBEINIMPLANTATS
DISPOSITIF CHIRURGICAL POUR MONTAGE D'UN IMPLANT ZYGOMATIQUE

(30) Priority: 06.06.2023 IT 202300011517
(43) Date of publication of application: 11.12.2024
(73) Proprietor: Zyg Zag S.r.l., 80128 Napoli (NA) (IT)
(72) Inventor: TOLLARDO, James, 35012 Camposampiero (PD) (IT)
(74) Representative: Gallo, Luca

(56) References cited:
- WO-A1-2018/064685
- US-A1- 2021 161 617
- US-A1- 2021 282 903
- US-A1- 2022 133 433

## Description

### Field of the invention

The present invention relates to a surgical device for mounting a zygomatic implant according to the preamble of the independent claim 1.

The surgical device subject of the invention can be advantageously used in guided maxillofacial surgery, in particular in zygomatic surgery, in order to mount a zygomatic implant on the zygomatic bone of a patient and it can be advantageously used both during the preparation (drilling) of the zygomatic bone and during the implant installation operations.

Therefore, the surgical device in question falls within the industrial sector of the production of surgical devices, particularly for guided surgery.

### State of the art

Zygomatic implants help to restore a fixed dentition for patients which have a bone deficiency and, as known, the installation of the implants mentioned above requires drilling of the zygomatic bone using a surgical reamer for the insertion of the implants. Such drilling operation requires a high degree of precision given that the zygomatic area is proximal to the eyes and nose of the patient, which organs may be damaged should the drilling be carried out along an erroneous direction.

To this end, various surgical devices have been designed adapted to guide one or more surgical reamers during the drilling of the zygomatic bone, comprising to this end a guide bush adapted to direct the surgical reamer towards the site of implantation of the zygomatic implant. However, these devices are designed to guide the aforementioned surgical reamers at the point of insertion, without being able to subsequently control the drilling direction, with the resulting risk of inserting the implant along an unwanted direction.

Therefore, surgical devices which allow to increase the degree of precision of the surgical reamer have been designed, such as for example the device described in patent US 2021/0282903.

**In** particular, such device comprises a substantially plate-like base, which is placed on a bone and is fixed to the latter at a maxillary ridge area of the patient.

The surgical device mentioned above further comprises two first guide adapters, which are fixed protruding from the plate-like base and comprise respective first guide seats aligned along an insertion direction to guide the surgical reamer and subsequently the zygomatic implant towards the correct implantation site.

**In** greater detail, the device mentioned above comprises two second guide adapters, which are obtained in a separate body and can be positioned manually by an operator within the first adapters to narrow the guide seats to guide surgical reamers that are smaller than the guide seats of the first adapters.

Furthermore, additional examples of zygomatic implants are known from document US 2021/161617, which discloses a device for mounting a zygomatic implant comprising two guide half-channels that extend in parallel and rest against the patient's body, serving to guide the surgical drill along its drilling path.

The surgical devices described so far have revealed some drawbacks.

A first drawback lies in the fact that conventional surgical devices are rest on and are supported by the mucosa, which may lead to inflammation of the latter, as well as reducing the stability of the site of fixation of the devices mentioned above.

A further drawback lies in the fact that such devices do not allow high precision guidance of the reamers as they are fixed in a position near the maxillary or alveolar ridge, which is distal from the maxillary sinus and the zygomatic bone to be drilled, therefore, during insertion of the reamer into the adapters, the base may be displaced, leaving the operating surgeon a considerable margin of uncertainty.

A further drawback lies in the fact that such devices are uncomfortable to use, as a surgeon must manually hold the second adapters in place with one hand while operating the reamer with the other hand, or alternatively, and this obviously requires the help of an assistant.

A further drawback lies in the fact that the devices mentioned above do not allow for high visibility of the site of implantation and in particular the drilling area during the handling of the surgical reamer and the implant.

A further drawback lies in the fact that devices mentioned above have proved to be extremely uncomfortable in particular during the removal stage following implant installation, as it requires the entire device to be removed along the insertion direction, causing considerable difficulties for the surgeon.

A further drawback lies in the fact that the devices mentioned above are expensive as they require a large number of components and in particular an expensive design of the base plate in order to shape it precisely on the bone of the patient to be operated, in order to avoid instability of the plate-like base during the surgical operation.

### Summary of the invention

In this situation, the problem underlying the present invention is to eliminate the drawbacks of the prior art mentioned above by providing a surgical device to mount a zygomatic implant, as defined in claim 1, that allows to position the zygomatic implant in a precise and reproducible manner.

A further object of the present invention is to provide a surgical device that allows to mount the zygomatic implant without the risk of inflammation of the patient's soft tissues.

A further object of the present invention is to provide a surgical device which is stably fixed to the bone throughout the surgical procedure.

A further object of the present invention is to provide a surgical device which does not require a hand to support adapter elements during the operation.

A further object of the present invention is to provide a surgical device that is cost-effective and easy to manufacture.

A further object of the present invention is to provide a surgical device that allows to insert a zygomatic implant, irrespective of the anatomy of the patient, in particular implants in an extra sinus, trans sinus or intra sinus position.

A further object of the present invention is to provide a surgical device that can be easily conformed on the zygomatic bone and customizable for the various patients to be operated.

### Brief description of the drawings

The technical characteristics of the invention, according to the objects mentioned above, are clearly observable from the content of the claims outlined below and the advantages thereof will be more apparent from the detailed description that follows, provided with reference to the attached drawings, which represent some embodiments thereof provided purely by way of nonlimiting example, wherein:
- Figure 1 shows a perspective view of a detail of the mounting device for a zygomatic implant subject of the present invention, relating to a support structure mounted on a patient's maxillary bone;
- Figure 2 shows a view of the support structure of Figure 1;
- Figure 3 shows a further view of the support structure of Figure 1, with a first set of centering elements mounted;
- Figure 4 shows a further view of the support structure of Figure 3, with alignment bars mounted.
- Figures 5a and 5b show a perspective view of the centering elements of a first set and of a second set of centering elements respectively;
- Figure 6 shows a view of the device subject of the invention, with the second set of mounting centering elements on which several zygomatic implants are inserted;

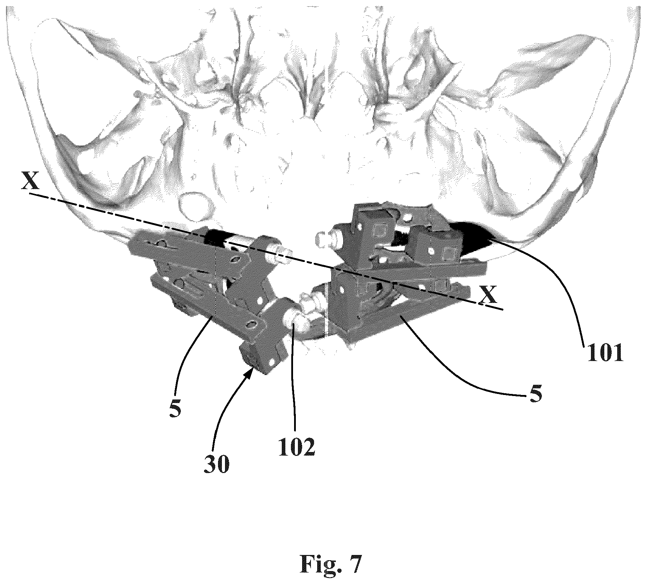

- Figure 7 shows a further view of the device of Figure 6, with alignment bars mounted.

### Detailed description of a preferred embodiment

With reference to the attached drawings, the surgical device for mounting a zygomatic implant subject of the invention, has been indicated in its entirety with 1.

The device 1 subject of the invention is advantageously designed to be used in guided surgery, in particular zygomatic maxillofacial guided surgery, so as to prepare a site of implantation using prior art milling operations and to subsequently install a zygomatic implant, which is well known to the person skilled in the art and will not be described in detail below.

According to the invention, the surgical device 1 for mounting a zygomatic implant 100 comprises a support structure 2, intended to be abuttingly fixed on a zygomatic bone O of a patient. Obviously, the support structure 2 may also abut against various portions of the patient's bone, such as for example the alveolar maxillary ridge, maxillary sinus, etc. without departing from the scope of protection of the present invention.

Advantageously, the support structure 2 is made of a metal material, preferably biocompatible such as for example titanium or a chromium-cobalt alloy, and it is advantageously by means of a rapid prototyping technique, in particular on the basis of a computer design described in more detail below.

Obviously, this support structure 2 can also be made of a different material, such as for example a plastic material, preferably also biocompatible, or alternatively made of a ceramic material. Advantageously, the support structure 2 is counter-shaped to the patient's bone against which it is to abut, so as to define an intimate, non-punctual (in only one point) abutment, which increases the stability of the entire implant during the surgical procedure, as better described below.

The device 1 further comprises guide means 3, which are mechanically fixed to the support structure 2 and comprising at least two centering elements 30, which two centering elements 30 are provided with respective centering through holes 30', aligned with each other along an insertion direction X.

In greater detail, the expression "centering through holes" will be used hereinafter to indicate a generic through opening obtained on the corresponding centering element 30, without such opening necessarily having to be intended as compulsorily defining a closed inner surface.

The centering through holes 30' are adapted to be engaged slidably by a work tool F, preferably substantially to size, such as for example a surgical reamer or directly the zygomatic implant, in order to orient the latter in the insertion direction X, in particular toward a point for mounting the zygomatic implant 100, which is advantageously to be understood as the point on the zygomatic bone O for the entrance of the implant, and it is operatively predetermined by the surgeon on the basis of a surgical and instrumental analysis well known to the person skilled in the art and therefore not described below.

As better described below, the guide means 3 may comprise several centering elements 30, which are advantageously arranged in pairs, so that the respective centering through holes 30' of two centering elements 30 are aligned with each other along the insertion direction X. Obviously, it should not be understood that the centering through holes 30' of all centering elements 30 are aligned with each other along the insertion direction X.

According to the idea underlying the present invention, the support structure 2 comprises at least two support portions 20, spaced from each other, shaped to abut against the zygomatic and/or maxillary bone to which they are intended to be mechanically fixed, and at least two support arms 21, which are extended projectingly from the abutment portions 20 of the support structure 2, in which each of at least two support arms 21 carries, mounted thereon, a corresponding centering element 30, with the centering through holes 30' aligned with each other.

In particular, the two abutment portions 20 are separated from each other by a gap, namely, a void space, through which, in use, the patient's bone is visible when device 1 is mounted on the bone.

Advantageously, the two abutment portions 20 are connected to each other exclusively using the support arms 21.

Advantageously, the support arms 21 extend with elongated development, moving away from the corresponding abutment portion 20, to arrange the centering elements 30 spaced from the surface of the bone O on which the abutment portions 20 are adapted to abut.

Obviously, the structure may comprise further arms l, for example which have the function of connecting distinct support arms 21 or stiffen the support structure 2, which also rise protruding from the abutment portions 20, and on which centering elements 30 are not necessarily mounted. The particular support structure 2 provided with support arms 21 allows to obtain a device 1 that is extremely solid , light and easy to install at the same time. In addition, it allows to obtain a device 1 that allows a wide visibility of the entire implantation area and the sliding of the tools for the surgeon.

Advantageously, the support structure 2 may be provided with two abutment portions 20, or preferably three abutment portions 20, in order to improve the bone abutment of the device 1 on the patient's bone.

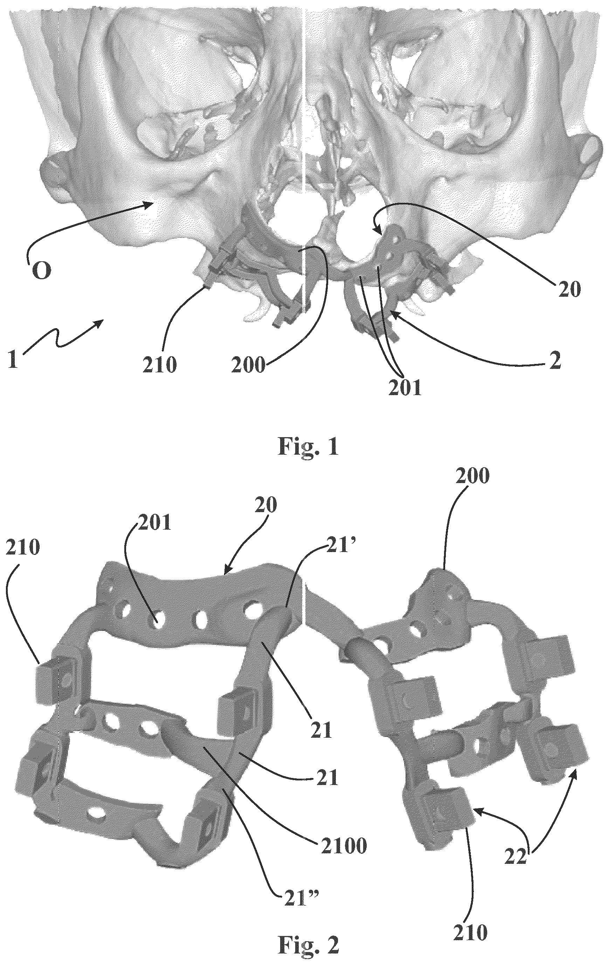

In some cases, depending on the clinical needs of the patient, a support structure 2 comprising as a single body two series of abutment portions 20, as shown in figure 2, may also be provided for. In particular, according to such variant embodiment, the support structure 2 comprises a first series of abutment portions 20', preferably substantially aligned with respect to each other along a first alignment direction Z, and a second series of abutment portions 20'', also preferably aligned with respect to each other along a second alignment direction Z', which second series of abutment portions 20'' is arranged opposite to the first set of abutment portions 20'. This allows, depending on the needs of the patient, the possibility to simultaneously operate on opposite portions of the zygomatic bone, in order to install implant 100 on both the right and left sides of the patient's bone.

Advantageously, each abutment portion 20 comprises an abutment element 200 which is substantially plate-like, which is preferably counter-shaped with respect to the bone portion on which it is intended to be placed. Each abutment element 200 is advantageously provided with one or more fixing holes 201, depending on its size, which are adapted to be engaged by corresponding bone screws for stably fixing the support structure 2 to the patient's bone.

Preferably, each abutment element 200 extends, along a main direction, which is preferably oriented substantially parallel to the insertion direction X.

In greater detail, the abutment portions 20 are positioned between the pear-shaped opening, the alveolar ridge and the maxillo-malar pillar, and preferably fixed on the resistance pillars. This positioning advantageously allows to mount the device 1 in a position proximal to the drilling areas when installing the zygomatic implant 100.

Advantageously, the support arms 21 extend protruding from a corresponding abutment element 200, and preferably two distinct support arms 21 rise from each abutment element 200, particularly from opposite sides of the corresponding abutment element 200.

Therefore, one of the two support arms 21 is susceptible to be arranged in proximity of a ridge implantation point, while the other is susceptible to be arranged in proximity of an apical implantation point.

Advantageously, the abutment portions 20 are shaped and arranged so that the device 1 can be oriented uniquely on the patient's face, so as to allow a quick installation of the device 1 and reduce the risk of errors by the surgeon.

Advantageously, the abutment portions 20 abut directly on the bone tissue and not on the soft tissues, so as to avoid collapsing or misalignment of the supporting structure 2 due to possible inflammation of the mucous membrane or abnormal absorption of the anesthetic by the muscular membrane itself.

Advantageously, the support arms 21 are provided with a substantially arched extension, preferably with concavity designed to be faced toward the zygomatic bone, and they extend between a first end 21', which is mechanically fixed, preferably as a single body, to a corresponding abutment portion 20, and a second end 21'.

Advantageously, the support arms 21 extend in an arched development.

In particular, the expression "arched" is used to indicate both a curved development, and a linear development in sections of the support arms 21.

The arched development of the support arms 21 is particularly advantageous in allowing a general increase in the stiffness and strength of the support structure 2 without, however, increasing the overall dimensions of the device 1 in particular in a direction substantially orthogonal to the plane of the zygomatic bone O of the patient. Furthermore, the arched development of the support arms 21 allows to position one of the two centering elements 30, beyond the maxillary ridge C of the patient to simultaneously expose allowing the entire surgical area during the surgical procedure.

In this manner, the support structure 2 takes a particularly effective structural stability in supporting the centering elements 30 and it is particularly stable throughout the surgical stages for preparing the site and mounting the zygomatic implant.

Advantageously, the support arms 21 develop between two distinct abutment portions 20, in particular with a first end 21' thereof, which is mechanically fixed to a first abutment portion 20, and the second end 21'' thereof which is mechanically fixed to a second abutment portion 20. Advantageously, the support arms 21 can be directly fixed to the abutment portions 20 or they can be connected to the latter using further connection arms 2100, for example as shown in figure 2. In the latter case, the first end 21' of the support arm 21 is advantageously fixed to the abutment portion 20 using the aforementioned connection arm 2100.

Otherwise, it may be provided for that distinct support arms 21, which meet in a common connection point, raised from the abutment portion 20, rise from each support portion 20.

In particular, the support arm 21, which rises from each abutment portion 20, meets at the common connection point mentioned above with a support arm 21 which develops from another abutment portion 20.

In this case, each support arm 21 develops between the first end 21' thereof and the second end 21'' thereof, which is fixed to the second end 21'' of another support arm 21.

In other words, the support structure 2 may comprise several pairs of support arms 21, in which each pair of support arms 21 is adapted to support a common centering element 30, with each pair of support arms 21 which comprises two support arms 21 which extend from distinct abutment portions 20 up to a common mounting portion 22, obtained at the second ends 21'' mentioned above.

Advantageously, the common mounting portion 22 carries, mounted thereon, the centering element 30 mentioned above.

In particular, the common mounting portion 22 is arranged in the common connection point mentioned above.

The device 1 advantageously comprises several centering elements 30, each of which is provided with a corresponding centering through hole 30' which is shaped substantially to fit a determined work tool, in order to optimize the guiding of all the various tools that can be used during the surgical procedure.

Advantageously, the support arms 21 are provided with respective retention appendages 210 and the centering elements 30 are provided with respective engagement seats 300 in which a retention appendage 210 of the corresponding support arm 21 is at least partially inserted, on which said centering element 30 is mounted. Obviously, without departing from the scope of protection of the present invention, there can also be provide for an engagement seat on the retention appendage 210 and it may be provided for that a portion of the support arm 21 (in particular at a second end 21'' thereof) engages the engagement seat mentioned above obtained on the retention appendage 210.

Advantageously, each support arm 21 is provided with a corresponding mounting portion 22, which is provided with retention appendage 210, and each centering element 30 is mounted on the mounting portion 22 of a support arm 21.

Obviously, in the case of pairs of support arms 21, the mounting portion 22 is one and common for the two support arms 21 of each pair.

Preferably, the mounting portion 22 is arranged raised with respect to the abutment portion 20, and it is therefore intended to be arranged spaced from the zygomatic or maxillary bone of the patient.

Advantageously, the centering elements 30 are removably connectable and disconnectable to/from the retention appendages 210. This allows to replace the centering element 30 used as a function of the type of work tool (surgical reamer, zygomatic implant, grinding balls, etc.) or even the shape and size of the work tool.

Advantageously, each centering element 30 is provided with a clamping hole, placed in communication with the engagement seat 300 of the same centering element 30, and a retention dowel (or equivalent restraint means) adapted to engage the hole mentioned above so as to cooperate with the retention appendage 210 so as to removably constrain the latter in the engagement seat 300 of the centering element 30.

In greater detail, the retention appendages 210 are obtained, preferably as a single body, at the mounting portion 22 of the support arm 21.

In this manner, the centering elements 30 are removably connectable and disconnectable to/from the mounting portions 22.

In greater detail, the retention appendages 210 are advantageously provided with a polygonal section and the engagement seats 30 are substantially counter-shaped to the polygonal section of the corresponding retention appendage 210, in order to prevent the mutual rotation of said centering element 30 and the retention appendage 210.

Obviously, without departing from the scope of protection of the present invention, there can also be provide for retention appendages 210 on the centering elements 30 and engagement seats 300 on the mounting portions 22, therefore providing for a simple reversal of the connection mentioned above.

The retention appendages 210 and engagement seats 300 preferably develop along an extension direction X', transversal, and preferably substantially orthogonal to the insertion direction X. In other words, the centering elements 30 engage the retention appendages 210 transversely with respect to the insertion direction X of the tool.

Advantageously, the centering elements 30 have a connection portion 301, on which the engagement seat 300 is obtained and which is mechanically connected to a corresponding said retention appendage 210, and an operating portion 302, on which the corresponding centering through hole 30' is made in order to allow the insertion of the work tool F.

Advantageously, the connection portion 301 and the operative portion 302 of the centering element 30 are inclined with respect to each other by an angle α, preferably comprised between 80° and 100°, and even more preferably close to 90°.

Advantageously, the centering elements 30 are L-shaped, with the connection portion 301, on which the engagement seat 300 is obtained, which extends substantially parallel to the insertion direction X, and with the operative portion 302, on which obtained the centering through hole 30' is obtained, which extends substantially orthogonally to the connection portion 301.

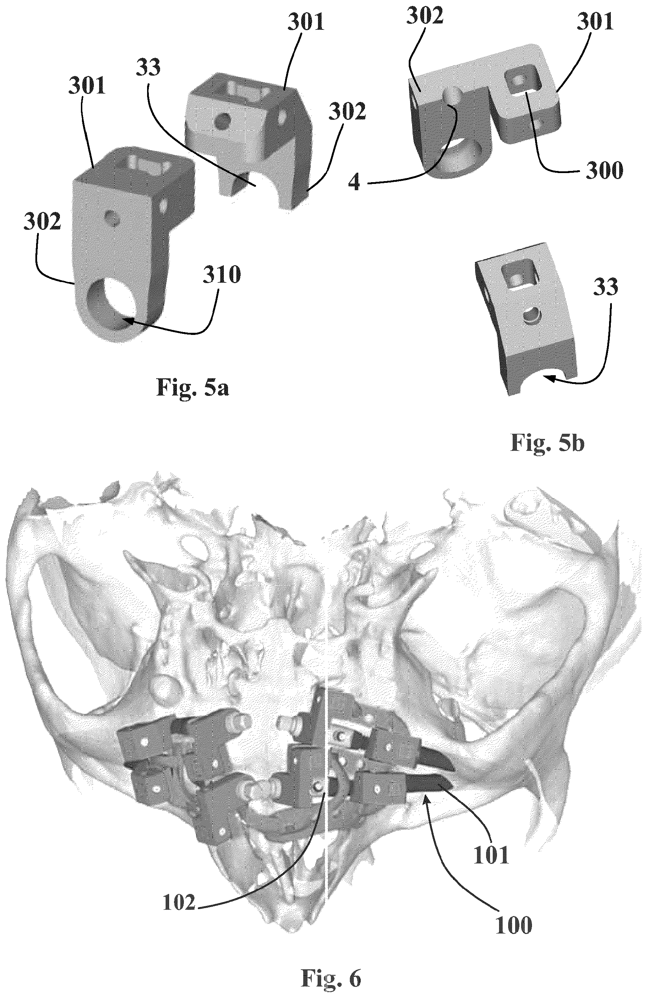

Advantageously, as shown in figure 6, when the device 1 is mounted on the bone, the operative portion 302 extends protruding beneath the connection portion 301 toward the patient's bone. Advantageously, the operative portion 302 of the centering element 30 extends between an upper end, fixed to the connection portion 301 of the centering element 30, and a vacant lower end, which is faced towards the patient's bone when the device 1 is mounted.

Preferably, the centering through hole 30' is obtained at the vacant lower end of operative portion 302.

In this manner, the width of the osteoctomy procedure required to allow the insertion of the centering element 30 into the patient's bone can be significantly reduced.

As a matter of fact, operatively, it is known that the centering element must at least partially engage the patient's bone in order to allow the drilling and subsequent engagement of the maxillary and zygomatic bone by the implant. The provision of a centering element 30 with transversal insertion, in particular orthogonal, with respect to the insertion direction X of the tool therefore allows to carry out a limited machining, such to substantially allow the introduction of the lower end of the operative portion 302 of the centering element 30 alone into the bone.

Advantageously, the engagement seat 300 of the centering elements 30 and the retention appendages 210 are symmetrical with respect to a vertical symmetry plane orthogonal to the insertion direction X. In this manner, the centering elements 30 can be engaged on the support arms 21 in two distinct positions, mutually staggered by 180°. In particular, the centering elements 30 can be arranged with the connection portion 301 which extends from the operative portion 302 toward the patient's zygomatic bone, or moving away from the latter.

As outlined above, the guide means 3 comprise multiple pairs of centering elements 30, in which the centering elements 30 of each pair are arranged with their respective centering through holes 30' aligned along the insertion direction X. In particular, the guide means 3 comprise at least one first centering element 31, intended to be placed in proximity to a maxillary ridge bone C of the patient, and a second centering element 32, spaced from the first centering element 31 along the insertion direction X and intended to be placed in proximity to the zygomatic bone O of the patient, in particular in proximity of the implant mounting point, preferably on the zygomatic bone O of the patient.

Preferably, the first centering element 31 is mounted in the palatal position, and the second centering element 32 is located in the apical position, in the vestibular portion of the jaw, toward the zygomatic bone O.

Furthermore, advantageously, at least the centering through hole 30' of the first centering element 31 is a circular hole defining a corresponding cylindrical slide seat 310 in which the work tool is susceptible to slide, preferably substantially to size. In this manner, the work tool is constrained by the first centering element 31 and it is only free in its sliding along the insertion direction X (net of a minimum possible inclination for the normal dimensional tolerance clearances of the second centering hole 30').

Advantageously, should the work tool to be inserted be a surgical reamer F, also the centering through hole 30' of the second centering element 32 is a circular hole defining a cylindrical slide seat 310 into which the working tool is susceptible to slide, so that the surgical reamer is guided safely and accurately being provided with only one degree of freedom to slide along the insertion direction X.

Alternatively, should the work tool be a zygomatic implant 100, the centering through hole 30' of the second centering element 32 is advantageously a semicircular open hole, which defines a semicylindrical slide seat 33.

This allows to remove the support structure 2 from the patient's bone and release it from the latter without the need to slide it along the insertion direction X even should a coronal portion of the zygomatic implant 100 still engages the semicylindrical slide seat 33 even after it has been fully inserted.

The two first centering elements 31 mentioned above are advantageously interchangeable during the distinct preparation and mounting steps so as to effectively and precisely guide all the work tools used. Therefore, also the two second centering elements 32 are advantageously interchangeable with respect to each other.

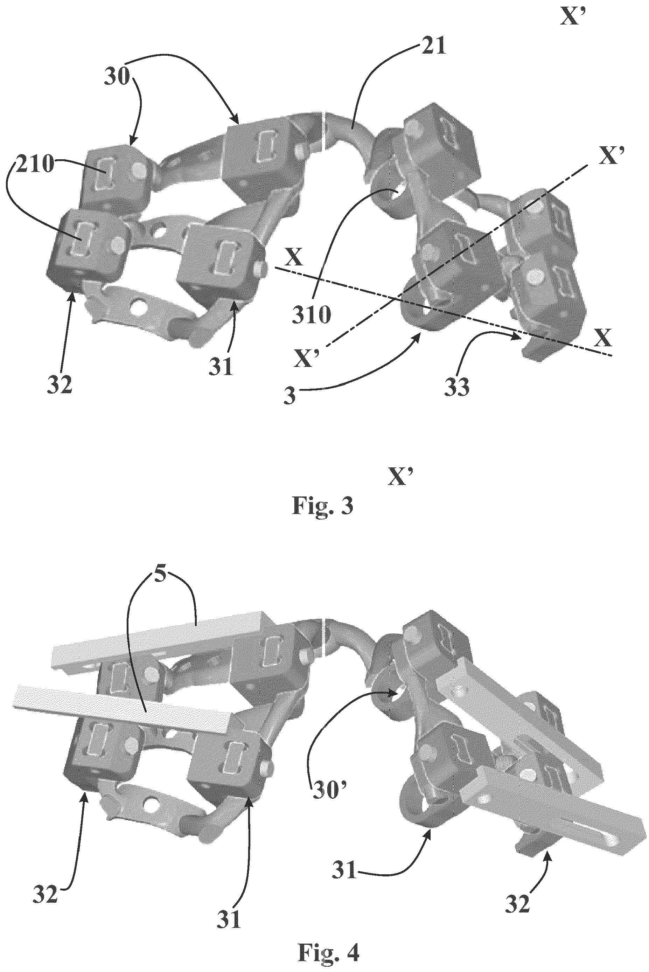

Advantageously, the device 1 comprises at least one first set of centering elements 30, shown in figure 3 and 4, as well as in figure 5a, which can be advantageously used in particular during the drilling of the zygomatic bone by means of a surgical reamer. Such first set of centering elements 30 preferably comprises the first and the second centering elements 31, 32 which are L-shaped. In particular, the centering elements 30 of the first set of centering elements 30 have the operative portion 302 which is arranged aligned below the connection portion 301. In other words, the expression "aligned" is used to indicate that the operative portion 302 and the connection portion 301 of the centering elements 30 of the first set are not spaced apart along a misalignment direction Z that is substantially orthogonal to the insertion direction X and the extension direction X'.

Advantageously, the device 1 comprises at least one second set of centering elements 30, shown in figure 5b, which can be advantageously used in particular during the mounting of the zygomatic implant 100. Such second set of centering elements 30 comprises second centering elements 32 preferably substantially identical to the second centering elements 32 of the first set, irrespective of the cylindrical or semi-cylindrical seat defined by the centering through hole 30'. The first centering elements 31 of the second set are advantageously double L-shaped. In particular, the first centering elements 31 of the second set of centering elements 30 have the operative portion 302 which is arranged misaligned with respect to the connection portion 301. Advantageously, the connection portion 301 of the first centering elements 31 of the second set is offset from with respect to the corresponding operative portion 302 along the misalignment direction Z, which is substantially orthogonal to the insertion direction X of the extension direction X'. In other words, the operative portion 302 is not arranged precisely above the connection portion 301.

In this case, both the connection portion 301 and the operative portion 302 are preferably L-shaped.

Advantageously, the centering through hole 30' of the first centering elements 31 has an inconsistent inner diameter along its entire depth, and therefore it does not define a cylindrical seat. In greater detail, the centering through hole 30' of the first centering elements 31 has a smaller inner diameter near a median portion along the extension direction of the seat, such to define a central cusp, and as a result a larger (particularly increasing) inner diameter from the cusp (in the median section) toward the openings which delimit the slide seat mentioned above. Such provision of the centering through hole 30' of the first centering elements 31 allows to slightly incline the mounting device when it is removed after the positioning of the zygomatic implant 100 after it has been installed, in order to facilitate the disassembly of the portion mentioned above and therefore facilitate its removal.

In greater detail, the zygomatic implants 100 comprise in a per se known manner a main body 101, which defines the actual prosthetic implant which is installed in the patient's bone, and a mounting portion 102, which is mounted at the head of the main body 101 and it is provided with a gripping end (usually a nut) which allows to screw the main body 101 onto the patient's bone. In order to allow for such rotary engagement between the mounting portion 102 and the main body 101, the mounting portion 102 engages the hexagonal portion of the main body 101.

However, such shape coupling makes it difficult to separate the mounting portion 102 from the main body 101 along the insertion direction X after the mounting of the main body 101 on the patient's bone, given that the hexagonal portion of the latter prevents the translation of the mounting portion 102.

Therefore, in this case, the provision of the centering through hole 30' of the first centering elements 31 allows to slightly incline the mounting portion mentioned above, by an angle such to allow to disengage the mounting portion 102 from the hexagonal portion of main body 101 to facilitate disassembly and removal of mounting portion 102 along the insertion direction X mentioned above.

Advantageously, the first centering elements 31 are provided with a centering notch 4 which is obtained on the operative portion 302. The centering notch 4 is preferably shaped so that it can be engaged by a tool in a unique way, so as to allow to position such tool in the notch in order to understand when the implant 100 is in the correct position, both in terms of depth (along the insertion direction X), in terms of angular position (around the same insertion direction X).

Advantageously, the device 1 comprises at least one extended alignment bar 5, which is for example shown in figure 4. The positioning bar 5 advantageously extends substantially parallel to the insertion direction X, and it is susceptible to carry, mounted thereon, at least one first centering element 31 and at least one second centering element 32, irrespective of the first or second set of centering elements 30, to mount the first centering element 31 and the second centering element 32 together on the corresponding retention appendages 210.

This allows to facilitate the gripping and movement of the centering elements 30, which are extremely difficult to grip and handle due to their small size, therefore reducing the risk of errors or loss of the centering elements 30.

A production method and a process for mounting the 1 device described so far and for mounting the zygomatic implant 100 using the 1 device, with regard to which the same numerical references will be maintained for the sake of descriptive simplicity, will be described hereinafter. **In** greater detail, the method for producing the device 1 advantageously provides for a first step of scanning the patient's skull, for example by using a computed tomography scan or similar computed scanning technique, so as to acquire a first dataset from the portion of the bone of the patient to be treated. Following the scan, the dataset mentioned above is advantageously converted into a 3D dataset in a format adapted to be read by a CAD viewer, for example in a "stl" format. The 3D dataset is advantageously imported into a computer so as to allow the digital design of the device **1,** in particular by firstly identifying the ideal position and orientation of the implant from an anatomical point of view, which is in turn conditioned by the ideal position of the prosthesis.

The method for producing the device 1 further advantageously provides for an initial design step for the support structure 2 of the device **1,** in particular by firstly identifying the optimal geometry of the abutment portions 20 and the relative abutment points of the latter, wherein, preferably, using a program, the supporting portions 20 are drawn and from these the support arms 21 and the mounting portions 22 are drawn, based on the desired insertion direction X and drilling direction and, above all, based on the design and arrangement of the subsequent zygomatic implant 100.

After the modeling step, the file is advantageously sent to a rapid prototyping machine, for example selective laser sintering (SLS), 3D printer, or alternative rapid prototyping techniques, which produces the entire support structure 2 of device 1 based on the digital design obtained from the program.

Advantageously, the centering elements 30 can be produced, preferably starting from the file previously processed during the modeling step, using different prototyping techniques, such as for example milling, molding, laser melting.

Preferably, the centering elements 30 can be made of a metal material (titanium, a chromium-cobalt alloy), a polymeric material or a ceramic material.

This allows to obtain a device 1 for the zygomatic guided surgery using a totally digital procedure, which therefore allows to obtain a device 1 that is highly customizable on the user and highly comfortable to use both for the surgeon and in terms of customer invasiveness, given that it allows to reduce the interaction between device 1 and portions of the bone or soft tissue that should not be touched or stressed during surgery.

After the production step, the support structure 2 is advantageously sterilized and subsequent placed on a patient's bone at the points previously identified using the modeling program.

Operatively, the process for mounting the device 1 comprises a step for positioning the abutment portions 20 on the maxillary bone of a patient and a subsequent fixing step in which the abutment portions 20 are fixed using screws (using the fixing holes 201) for fixing the support structure 2 to the maxillary or zygomatic bone of the patient.

The method advantageously further comprises a step for coupling a first centering element 31 to the corresponding mounting portion 22 next to the maxillary ridge bone C of the patient and a second centering element 32 to the corresponding mounting portion 22 proximal to the zygomatic bone O of the patient.

In particular, at such step, the first centering element 30' is a centering element provided with a circular centering through hole, which defines a cylindrical slide seat 310, so as to allow the insertion of a drill bit of a surgical reamer F.

In greater detail, the method provides for at least one first drilling step, in which the surgical reamer F is firstly inserted into the cylindrical slide seat 310 of the first centering element 31 to drill the bone ridge C of the patient and subsequently the surgical reamer F (or a second reamer) is inserted into the cylindrical slide seat 310 of the second centering element 32 to also drill the zygomatic bone O of the patient at the implantation point.

Obviously, such method may comprise multiple drilling steps, obtained using surgical reamers F with gradually increasing diameter so as to obtain, firstly, a pre-hole that is useful for the final hole of the desired diameter.

In particular, the cylindrical seats 310 obtained on the first and second centering element 31, 32 are provided with an inner diameter preferably substantially equal to the outer diameter of the surgical reamer F mentioned above, in order to guide the latter precisely along the insertion direction X.

To this end, multiple sets of centering elements 30 (provided with different diameters and/or thicknesses) so as to use those deemed most adapted to the particular reamer used during the various drilling steps, may obviously be provided for.

Furthermore, the method advantageously provides for the replacement of the second centering element 32 and a second step for coupling a second centering element 32 other than the one previously used, in particular provided with a semicircular centering through hole 30' and defining a semi-cylindrical seat 33. On the other hand, preferably, the first centering element 31 will always be provided with a cylindrical slide seat and will be changed in terms of its dimensions alone.

Such centering elements 31, 32 are advantageously provided with the same diameter as the zygomatic implant 100 to be installed, in order to guide it precisely within the insertion hole through the centering elements 31, 32 and allow it to be fixed (by screwing) to the previously drilled zygomatic bone O of the patient.

Following the insertion of implant 100, the second centering element 32 can be removed from the mounting portion 22 by providing a semi-cylindrical seat 33, while the remaining part of the support structure 2 (together with the first centering element 31) can be advantageously removed along the drilling/insertion direction.

Therefore, the invention thus conceived attains the pre-set objects.

## Claims

1. Surgical device for mounting a zygomatic implant, which comprises:
- a support structure (2), intended to be abuttingly fixed on a zygomatic or maxillary bone (O) of a patient;
- guide means (3), mechanically fixed to said support structure (2) and comprising at least two centering elements (30), each of which is provided with a respective centering through hole (30'), and said centering through holes (30') are aligned with each other along an insertion direction (X), and are adapted to be slidably engaged by a work tool (F) in order to orient the latter in said insertion direction (X);
wherein said support structure (2) comprises:
- at least two abutment portions (20), spaced from each other, shaped to abut on said bone (O), to which they are intended to be mechanically fixed;
said device being **characterized in that** said support structure (2) comprises:
- at least two support arms (21), which are extended projectingly from said abutment portions (20), wherein each of said support arms (21) carries, mounted thereon, one corresponding centering element of said at least two centering elements (30), with said centering through holes (30') aligned with each other.

2. Device according to claim 1, **characterized in that** said support arms (21) are provided with respective retention appendages (210) and that said centering elements (30) are provided with respective engagement seats (300), in which a retention appendage (210) of the corresponding said support arm (21) is at least partially inserted, on which said centering element (30) is mounted.

3. Device according to claim 2, **characterized in that** said centering elements (30) are removably connectable and disconnectable to/from the retention appendages (210) of said support arms (21).

4. Device according to claim 2 or 3, **characterized in that** said retention appendages (210) are provided with a polygonal section and the engagement seats (300) of said centering elements (30) are substantially counter-shaped to the polygonal section of the corresponding said retention appendage (210), in order to prevent the mutual rotation of said centering element (30) and said retention appendage (210).

5. Device according to claim 4, **characterized in that** said retention appendages (210) and said engagement seats (300) are extended along an extension direction (X') that is transverse, and preferably orthogonal, to the insertion direction (X) of said centering holes (30').

6. Device according to claim 5, **characterized in that** at least one of said centering elements (30) has a connection portion (301), on which said engagement seat (300) is obtained and which is mechanically connected to a corresponding said retention appendage (210), and an operating portion (302), on which the corresponding said centering through hole (30') is made in order to allow the insertion of said work tool (F);
the connection portion (301) and the operative portion (302) of said centering element (30) being tilted from each other by an angle (α) comprised between 80° and 100°, preferably equal to 90°.

7. Device according to any one of the preceding claims, **characterized in that** said guide means (3) comprise a first centering element (31), intended to be placed in proximity to a maxillary ridge bone (C) of the patient, and a second centering element (32), spaced from said first centering element (31) along said insertion direction (X) and intended to be placed in proximity to said zygomatic or maxillary bone (O) of the patient;
at least the centering through hole (30') of said first centering element (31) being a circular hole defining a cylindrical slide seat in which said work tool (F) is susceptible of sliding.

8. Device according to claim 7, **characterized in that** the centering through hole (30') of said second centering element (32) is a semicircular open hole, which defines a semicylindrical slide seat.

9. Device according to claim 6 and claim 7 or 8, **characterized in that** said first centering element (31) has its connection portion (301) non-centered with respect to said operative portion (302) thereof, along a misalignment direction that is substantially orthogonal to said insertion direction (X) and to said extension direction (X').

10. Device according to any one of claims 2 to 6 and any one of the claims 7 to 9, **characterized in that** it comprises at least one alignment bar (5), which extends substantially parallel to said insertion direction (X), and is susceptible of carrying, mounted thereon, at least one said first centering element (31) and at least one said second centering element (32) in order to together mount said first centering element (31) and said second centering element (32) in the corresponding said retention appendages (210).

11. Device according to any one of the preceding claims, **characterized in that** each said abutment portion (20) comprises a substantially plate-like abutment element (200), which is counter-shaped with respect to said zygomatic or maxillary bone (O).

12. Device according to any one of the preceding claims, **characterized in that** said support arms (21) are provided with a substantially arched extension, preferably with concavity designed to be faced toward said bone (O), and they extend between a first end (21'), mechanically fixed to corresponding abutment portion (20), and a second end (21'').

13. Device according to claim 12, **characterized in that** said support structure (2) comprises several pairs of support arms (21), in which each pair of support arms (21) supports a common centering element (30), with each pair of support arms (21) comprising two said support arms (21) which extend from distinct said abutment portions (20) up to a common mounting portion (22), obtained at said second ends (21'').

14. Device according to claim 13, **characterized in that** each said centering element (30) is mounted on a corresponding said mounting portion (22).

15. Device according to claim 13 or 14, **characterized in that** said support arms (21) of each said pair meet in a common connection point, raised from said abutment portion (20);
wherein each support arm (21) extends between said first end (21') thereof and said second end (21'') thereof, which is fixed to the second end (21'') of another said support arm (21).

## Patentansprüche

1. Chirurgische Vorrichtung zur Befestigung eines Jochbeinimplantats, die Folgendes umfasst:
- eine Trägerstruktur (2), die dazu bestimmt ist, aufliegend auf einem Jochbein oder Oberkieferknochen (O) eines Patienten befestigt zu werden;
- Führungsmittel (3), die mechanisch an der genannten Trägerstruktur (2) befestigt sind und mindestens zwei Zentrierelemente (30) umfassen, von denen jedes mit einer entsprechenden Zentrierdurchgangsöffnung (30') versehen ist, welche Zentrierdurchgangsöffnungen (30') entlang einer Einführrichtung (X) miteinander ausgerichtet sind und geeignet sind, verschiebbar mit einem Arbeitswerkzeug (F) in Eingriff gebracht zu werden, um letzteres in der genannten Einführrichtung (X) auszurichten;
wobei die genannte Trägerstruktur (2) Folgendes umfasst:
- mindestens zwei Auflageabschnitte (20), im Abstand zueinander, die so geformt sind, dass sie auf dem genannten Knochen (O) aufliegen, an dem sie mechanisch befestigt werden sollen;
wobei die genannte Vorrichtung **dadurch gekennzeichnet ist, dass** die genannte Trägerstruktur (2) Folgendes umfasst:
- mindestens zwei Tragarme (21), die auskragend von den genannten Auflageabschnitten (20) aus verlaufen, wobei jeder der genannten Tragarme (21) ein entsprechendes der genannten mindestens zwei Zentrierelemente (30) montiert trägt, wobei die genannten Zentrierdurchgangsöffnungen (30') miteinander ausgerichtet sind.

2. Vorrichtung nach Anspruch 1, **dadurch gekennzeichnet, dass** die genannten Tragarme (21) mit entsprechenden Halteansätzen (210) versehen sind und dass die genannten Zentrierelemente (30) mit entsprechenden Eingriffssitzen (300) versehen sind, in die ein Halteansatz (210) des entsprechenden genannten Tragarms (21), auf dem das genannte Zentrierelement (30) montiert ist, zumindest teilweise eingesetzt ist.

3. Vorrichtung nach Anspruch 2, **dadurch gekennzeichnet, dass** die genannten Zentrierelemente (30) lösbar mit den genannten Halteansätzen (210) der genannten Tragarme (21) verbunden sind und von diesen gelöst werden können.

4. Vorrichtung nach Anspruch 2 oder 3, **dadurch gekennzeichnet, dass** die genannten Halteansätze (210) mit einem polygonalen Querschnitt versehen sind und die Eingriffssitze (300) der genannten Zentrierelemente (30) im Wesentlichen ein Gegenprofil zu dem polygonalen Querschnitt des entsprechenden genannten Halteansatzes (210) bilden, um die gegenseitige Drehung des genannten Zentrierelements (30) und des genannten Halteansatzes (210) zu verhindern.

5. Vorrichtung nach Anspruch 4, **dadurch gekennzeichnet, dass** die genannten Halteansätze (210) und die genannten Eingriffssitze (300) entlang einer Verlaufsrichtung (X') quer, und vorzugsweise orthogonal, zur Einführrichtung (X) der genannten Zentrieröffnungen (30') verlaufen.

6. Vorrichtung nach Anspruch 5, **dadurch gekennzeichnet, dass** mindestens eines der genannten Zentrierelemente (30) einen Verbindungsabschnitt (301), an dem der genannte Eingriffssitz (300) eingerichtet ist und der mechanisch mit einem entsprechenden genannten Halteansatz (210) verbunden ist, und einen operativen Abschnitt (302), an dem die entsprechende genannte Zentrierdurchgangsöffnung (30') eingerichtet ist, aufweist, um das Einsetzen des genannten Arbeitswerkzeugs (F) zu gestatten;
wobei der Verbindungsabschnitt (301) und der operative Abschnitt (302) des genannten Zentrierelements (30) um einen Winkel (α) zwischen 80° und 100°, vorzugsweise 90°, zueinander geneigt sind.

7. Vorrichtung nach einem beliebigen der vorangegangenen Ansprüche, **dadurch gekennzeichnet, dass** die genannten Führungsmittel (3) ein erstes Zentrierelement (31), das dazu bestimmt ist, in der Nähe eines Oberkieferkammknochens (C) des Patienten angeordnet zu werden, und ein zweites Zentrierelement (32), das sich zu dem genannten ersten Zentrierelement (31) entlang der genannten Einführrichtung (X) im Abstand befindet und dazu bestimmt ist, in der Nähe des genannten Jochbeins oder Oberkieferknochens (O) des Patienten angeordnet zu werden, umfassen;
wobei mindestens die Zentrierdurchgangsöffnung (30') des genannten ersten Zentrierelements (31) eine kreisförmige Öffnung ist, die einen zylindrischen Gleitsitz definiert, in dem das genannte Arbeitswerkzeug (F) zu gleiten geeignet ist.

8. Vorrichtung nach Anspruch 7, **dadurch gekennzeichnet, dass** die Zentrierdurchgangsöffnung (30') des genannten zweiten Zentrierelements (32) eine halbzylindrische, offene Öffnung ist, die einen halbzylindrischen Gleitsitz definiert.

9. Vorrichtung nach Anspruch 6 und Anspruch 7 oder 8, **dadurch gekennzeichnet, dass** das genannte erste Zentrierelement (31) seinen Verbindungsabschnitt (301) dezentriert im Verhältnis zu seinem genannten operativen Abschnitt (302), entlang einer im Wesentlichen zu der genannten Einführrichtung (X) und der genannten Verlaufsrichtung (X') orthogonalen Versatzrichtung, aufweist.

10. Vorrichtung nach einem beliebigen der Ansprüche 2 bis 6 und einem beliebigen der Ansprüche 7 bis 9, **dadurch gekennzeichnet, dass** sie mindestens eine Ausrichtungsleiste (5) umfasst, die im Wesentlichen parallel zu der genannten Einführrichtung (X) verläuft und geeignet ist, mindestens ein genanntes erstes Zentrierelement (31) und mindestens ein genanntes zweites Zentrierelement (32) montiert zu tragen, um das genannte erste Zentrierelement (31) und das genannte zweite Zentrierelement (32) zusammen in den entsprechenden genannten Halteansätzen (210) zu montieren.

11. Vorrichtung nach einem beliebigen der vorangegangenen Ansprüche, **dadurch gekennzeichnet, dass** jeder genannte Auflageabschnitt (20) ein, im Wesentlichen plattenförmiges, Auflageelement (200) umfasst, das im Verhältnis zu dem genannten Jochbein (O) oder Oberkieferknochen ein Gegenprofil bildet.

12. Vorrichtung nach einem beliebigen der vorangegangenen Ansprüche, **dadurch gekennzeichnet, dass** die genannten Tragarme (21) mit mindestens einem im Wesentlichen bogenförmigen Verlauf versehen sind, vorzugsweise mit einer Konkavität, die dazu bestimmt ist, zu dem genannten Knochen (O) gewandt zu sein, und zwischen einem ersten Ende (21'), das mechanisch an einem entsprechenden Auflageabschnitt (20) befestigt ist, und einem zweiten Ende (21'') verlaufen.

13. Vorrichtung nach Anspruch 12, **dadurch gekennzeichnet, dass** die genannte Trägerstruktur (2) mehrere Paare von Tragarmen (21) umfasst, wobei jedes Paar Tragarme (21) ein gemeinsames Zentrierelement (30) trägt, wobei jedes Paar Tragarme (21) zwei der genannten Tragarme (21) umfasst, die von verschiedenen genannten Auflageabschnitten (20) bis zu einem gemeinsamen Montageabschnitt (22) verlaufen, der an den genannten zweiten Enden (21') eingerichtet ist.

14. Vorrichtung nach Anspruch 13, **dadurch gekennzeichnet, dass** jedes genannte Zentrierelement (30) auf einem entsprechenden genannten Montageabschnitt (22) angebracht ist.

15. Vorrichtung nach Anspruch 13 oder 14, **dadurch gekennzeichnet, dass** die Tragarme (21) jedes genannten Paares an einem gemeinsamen Verbindungspunkt zusammentreffen, der von dem genannten Auflageabschnitt (20) erhoben ist;
wobei jeder Tragarm (21) zwischen seinem genannten ersten Ende (21') und seinem genannten zweiten Ende (21") verläuft, das am zweiten Ende (21") eines anderen genannten Tragarms (21) befestigt ist.

## Revendications

1. Dispositif chirurgical pour le montage d'un implant zygomatique, comprenant :
- une structure de support (2) destinée à être fixée en appui sur un os (O) zygomatique ou maxillaire d'un patient ;
- des moyens de guidage (3), fixés mécaniquement à ladite structure de support (2) et comprenant au moins deux éléments de centrage (30), chacun desquels est pourvu d'un trou traversant de centrage (30') respectif, ces trous traversants de centrage (30') étant alignés les uns avec les autres le long d'une direction d'insertion (X), et sont aptes à être engagés de manière coulissante par un outil de travail (F) pour orienter ce dernier dans ladite direction d'insertion (X) ;
où ladite structure de support (2) comprend :
- au moins deux portions d'appui (20), espacées l'une de l'autre, façonnées pour reposer sur ledit os (O) auquel elles sont destinées à être mécaniquement fixées ;
ledit dispositif étant **caractérisé en ce que** ladite structure de support (2) comprend :
- au moins deux bras de support (21), s'étendant en saillie à partir desdites portions d'appui (20), où chacun desdits bras de support (21) porte l'un desdits au moins deux éléments de centrage (30) correspondant monté, avec lesdits trous traversants de centrage (30') alignés les uns avec les autres.

2. Dispositif selon la revendication 1, **caractérisé en ce que** lesdits bras de support (21) sont pourvus d'appendices de retenue (210) respectifs et **en ce que** lesdits éléments de centrage (30) sont pourvus de sièges d'engagement (300) respectifs, dans lesquels un appendice de retenue (210) dudit bras de support (21) correspondant, sur lequel ledit élément de centrage (30) est monté, est au moins partiellement inséré.

3. Dispositif selon la revendication 2, **caractérisé en ce que** lesdits éléments de centrage (30) peuvent être reliés et détachés de manière amovible des appendices de retenue (210) desdits bras de support (21).

4. Dispositif selon la revendication 2 ou 3, **caractérisé en ce que** lesdits appendices de retenue (210) sont pourvus d'une section polygonale et les sièges d'engagement (300) desdits éléments de centrage (30) sont sensiblement en contre-forme par rapport à la section polygonale dudit appendice de retenue (210) correspondant, afin d'empêcher la rotation réciproque dudit élément de centrage (30) et dudit appendice de retenue (210).

5. Dispositif selon la revendication 4, **caractérisé en ce que** lesdits appendices de retenue (210) et lesdits sièges d'engagement (300) se développent le long d'une direction de développement (X') transversale, et de préférence orthogonale, à la direction d'insertion (X) desdits trous de centrage (30').

6. Dispositif selon la revendication 5, **caractérisé en ce qu'**au moins l'un desdits éléments de centrage (30) présente une portion de connexion (301), dans laquelle ledit siège d'engagement (300) est obtenu et qui est reliée mécaniquement audit appendice de retenue (210) correspondant, et une portion opérationnelle (302), dans laquelle ledit trou traversant de centrage (30') correspondant est obtenu pour permettre l'insertion dudit outil de travail (F) ;
la portion de connexion (301) et la partie fonctionnelle (302) dudit élément de centrage (30) étant inclinées l'une par rapport à l'autre d'un angle (α) compris entre 80° et 100°, de préférence de 90°.

7. Dispositif selon l'une quelconque des revendications précédentes, **caractérisé en ce que** lesdits moyens de guidage (3) comprennent un premier élément de centrage (31), destiné à être disposé à proximité d'un os crestal maxillaire (C) du patient, et un second élément de centrage (32), espacé dudit premier élément de centrage (31) le long de ladite direction d'insertion (X) et destiné à être disposé à proximité dudit os zygomatique ou maxillaire (O) du patient ;
au moins le trou traversant de centrage (30') dudit premier élément de centrage (31) étant un trou circulaire définissant un siège de glissement cylindrique dans lequel ledit outil de travail (F) est susceptible de glisser.

8. Dispositif selon la revendication 7, **caractérisé en ce que** le trou traversant de centrage (30') dudit second élément de centrage (32) est un trou ouvert semi-circulaire, qui définit un siège de glissement semi-cylindrique.

9. Dispositif selon la revendication 6 et la revendication 7 ou 8, **caractérisé en ce que** ledit premier élément de centrage (31) présente sa portion de connexion (301) décentrée par rapport à sa portion opérationnelle (302), le long d'une direction de désalignement sensiblement orthogonale à ladite direction d'insertion (X) et à ladite direction de développement (X').

10. Dispositif selon l'une quelconque des revendications 2 à 6 et l'une quelconque des revendications 7 à 9, **caractérisé en ce qu'**il comprend au moins une barre d'alignement (5), qui se développe sensiblement de manière parallèle à ladite direction d'insertion (X), et qui est susceptible de porter au moins un premier élément de centrage (31) et au moins un second élément de centrage (32) montés pour monter conjointement ledit premier élément de centrage (31) et ledit second élément de centrage (32) dans lesdits appendices de retenue (210) correspondants.

11. Dispositif selon l'une quelconque des revendications précédentes, **caractérisé en ce que** chaque portion d'appui (20) comprend un élément d'appui (200), sensiblement en forme de plaque, qui est en contre - forme par rapport audit os (O) zygomatique ou maxillaire.

12. Dispositif selon l'une quelconque des revendications précédentes, **caractérisé en ce que** lesdits bras de support (21) sont pourvus d'un développement sensiblement arqué, de préférence avec une concavité destinée à être orientée vers ledit os (O), et s'étendent entre une première extrémité (21'), fixée mécaniquement à une portion d'appui (20) correspondante, et une seconde extrémité (21").

13. Dispositif selon la revendication 12, **caractérisé en ce que** ladite structure de support (2) comprend plusieurs paires de bras de support (21), où chaque paire de bras de support (21) supporte un élément de centrage (30) commun, chaque paire de bras de support (21) comprenant deux dits bras de support (21) qui s'étendent à partir desdites portions d'appui (20) distinctes jusqu'à une portion de montage (22) commune, obtenue au niveau desdites secondes extrémités (21").

14. Dispositif selon la revendication 13, **caractérisé en ce que** chaque élément de centrage (30) est monté sur une dite portion de montage (22) correspondante.

15. Dispositif selon la revendication 13 ou 14, **caractérisé en ce que** les bras de support (21) de chaque paire se rejoignent en un point de connexion commun, surélevé par rapport à ladite portion d'appui (20) ;
où chaque bras de support (21) se développe entre sa dite première extrémité (21') et sa dite seconde extrémité (21"), qui est fixée à la seconde extrémité (21") d'un autre bras de support (21).
